# EUROPEAN PATENT APPLICATION

(11) **EP 1 684 446 A2**
(43) Date of publication of application: **26.07.2006**
(21) Application number: 06100451.1
(22) Date of filing: 17.01.2006
(51) Int. Cl.: H04B 10/08

(54) **A method and apparatus for testing optical network equipment**

(30) Priority: 21.01.2005 US 40538
(71) Applicant: Agilent Technologies, Palo Alto, CA 94303-0870 (US)
(72) Inventor: Curran-Gray, Martin, South Queensferry, Lothian EH30 9TG (GB); Mackenzie, Andrew, Agilent Tech. Canada, Inc., Burnaby, British Columbia V5H 4M2 (CA)
(74) Representative: Coker, David Graeme

(57) **Abstract**

A method of testing optical network equipment involves plugging a tester (10) device into a standard electrical socket 3, 5, 7) on the optical network equipment (1) to be tested. The tester device communicates with the optical network equipment to be tested via the standard electrical socket, appearing to the optical network equipment as though it were an optical transceiver that would be plugged into the standard electrical socket in normal use. The tester device thus has a plug with the same physical and electrical properties as the optical transceiver, and uses the same electrical signaling protocols and or formats that are used by the optical transceiver.

## Description

This invention relates to a method and apparatus for testing optical network equipment, particularly, though not exclusively, to a method and apparatus for testing optical network equipment provided with standard interface sockets for receiving optical transceiver modules operating according to particular standards, for example such as GBIC, SFP or XFP.

### Background of the Invention

In modern optical networks, the network equipment is provided with several, in some cases many, ports to which optical transceivers are connected. These transceivers convert the electrical signaling from the network equipment to optical signaling, which is then coupled to appropriate optical fibres to be transmitted thereby through the particular network to another optical transceiver where the optical signaling is again converted to electrical signaling for the network equipment at the other end of the signal path in the network.

The optical transceivers may couple the optical signals into one of a variety of different optical signaling standards, which may depend on the type of fibre being used, the laser wavelength being used, as well as the particular data rate. However, at the network equipment side, there are only a few particular standards that the optical transceivers and the network equipment ports adhere to. In general at the lower data rate of 2.5Gbits/s, there are two main form factors for these optical transceiver to network equipment interfaces. The older standard is the Gigabit Interface Converter (GBIC), used primarily to interface an optical fibre system with a Fibre Channel System or an Ethernet system such as Gigabit Ethernet. A GBIC allows designers to design one type of device that can be adapted for either optical or copper applications. A direct copper connection might be used, for example, if the network communication is with another piece of equipment located very near, so that direct electrical connection is more efficient that converting to and from optical. GBICs also are hot-swappable, which adds to the ease of upgrading electro-optical communication networks. A more modern standard is Small Formfactor Pluggable (SFP) for Ethernet, Fibre Channel, and SONET/SDH physical interfaces. SONET and SDH are a set of related standards for synchronous data transmission over fiber optic networks. SONET is short for *Synchronous Optical NETwork* and SDH is an acronym for *Synchronous Digital Hierarchy.* At higher data rates, the 10 Gigabit Small Form Factor Pluggable (XFP) Multi-Source Agreement allows manufacturers to provide common pluggable interface devices as 10Gbit/S Ethernet and Fibre Channel, and SONET/SDH interfaces around the 10Gbit/s rates, although other standards may be followed.

As is known, many optical network equipment modules have high speed serial interconnections, through which the "user" network traffic travels, as well as administration ports which allow access, sometimes of the command line interface variety, or a query/response data base style, usually either through a physical serial port, or a remote terminal interface over a networking connection.

In many cases if there is a fault, whether in the hardware or the software, either due to component failure, or by mis-configuration of the device, it can be difficult to pin down the problem, since the destination of output port signals may be in a different room, building, or city, and likewise the source of input port signals may be in a different room, building, or city, either of which may or may not be under the ownership and or control of the person responsible for running the equipment and or diagnosing the fault.

In order to carry out testing of a faulty device, therefore, it is common for a network equipment testing device with an optical interface to be connected to the optical interface(s) of the optical transceiver(s) connected to the network equipment. Thus, the network link optical fibres are disconnected from the optical transceiver(s), and a piece of test equipment plugged in. However, this requires that the user has optical fibre of the correct connector type and correct fibre construction, i.e. multi mode or single mode, and that the transceiver devices have suitable interfaces for connection to the test device. In some cases, the network equipment may be tested whilst not in active service, for example within a Research and Development laboratory. However, the laboratory test equipment, although fully functional and equipped with many different types of interface standards, etc, may be too expensive to allow for more than one such piece of equipment to be bought by the laboratory, so that not all users that need to use the equipment are provided access to enough test ports simultaneously to meet their needs at peak times.

Although test equipment may be obtained commercially currently, however, depending on the type of equipment it is, it may be either very expensive, and/or bulky and difficult to get to the network equipment being diagnosed, or, if small and cheap, it may not have the interfaces suitable to connect to the optical transceivers on the network equipment, or may not have sufficient test ports to test the equipment in a suitable manner to diagnose the fault. The person attempting to diagnose the fault may therefore have to carry many different types of fibre or interfaces for his test equipment. Furthermore, equipment that has many test ports may be too bulky to be easily maneuverable around a laboratory, or within an RFI test chamber, or environmental oven, for example.

### Brief Summary of the Invention

The present invention therefore seeks to provide a method and apparatus for testing optical network equipment, which overcomes, or at least reduces the above-mentioned problems of the prior art.

Accordingly, in a first aspect, the invention provides a test device for testing optical network equipment, the test device comprising a plug for plugging into a standard electrical socket on the optical network equipment to be tested, the plug having the same physical and electrical operating parameters as that of an optical transceiver that would be plugged into the standard electrical socket in normal use, an electrical interface coupled to the plug for transmitting and receiving electrical signals to and from the optical network equipment to be tested via the plug, a test controller module coupled to the electrical interface for generating test control signals in an appropriate protocol format for transmission to the optical network equipment to be tested for controlling and/or stimulating predetermined functions of the optical network equipment to invoke responses from the optical network equipment, and for receiving resultant signals from the optical network equipment.

In one embodiment, the test controller module further comprises a processor for processing the received resultant signals to generate test results. The test device may further comprise a memory for storing the received resultant signals and/or the test results.

The test device may further comprise a communication interface coupled to the test controller module including a connector for coupling to a communication path to a remote controller. The connector may provide for either a wired or a wireless connection to the communication path.

The test control signals may be generated in a protocol format that is compatible with a protocol or format that is used by the optical transceiver that would be plugged into the standard electrical socket in normal use.

According to a second aspect, the invention provides a method of testing optical network equipment, the method comprising the steps of plugging a tester into a standard electrical socket on the optical network equipment to be tested, operating the tester to communicate with the optical network equipment to be tested via the standard electrical socket, wherein the tester uses the same electrical signaling protocols that are used by an optical transceiver that would be plugged into the standard electrical socket to communicate with the optical network equipment in normal use so that the optical network equipment communicates with the tester in the same way as it would communicate with the optical transceiver, testing the optical network equipment using the tester to control and/or stimulate predetermined functions of the optical network equipment to be tested, receiving resultant signals from the optical network equipment, and processing the received resultant signals to produce test results.

The step of receiving resultant signals from the optical network equipment may occur at the tester or at a remote location. Similarly, the step of processing the resultant signals may occur at the tester or at a remote location.

The tester may comprise a test device as described above.

### Brief Description of the Drawings

One embodiment of the invention will now be more fully described, by way of example, with reference to the drawings, of which:
FIG. 1 shows a schematic diagram of a piece of network equipment having a number of different standard sockets; and
FIG. 2 shows a schematic diagram of a test device according to one embodiment of the present invention that can be utilized to test the network equipment of FIG. 1.

### Detailed Description of the Drawings

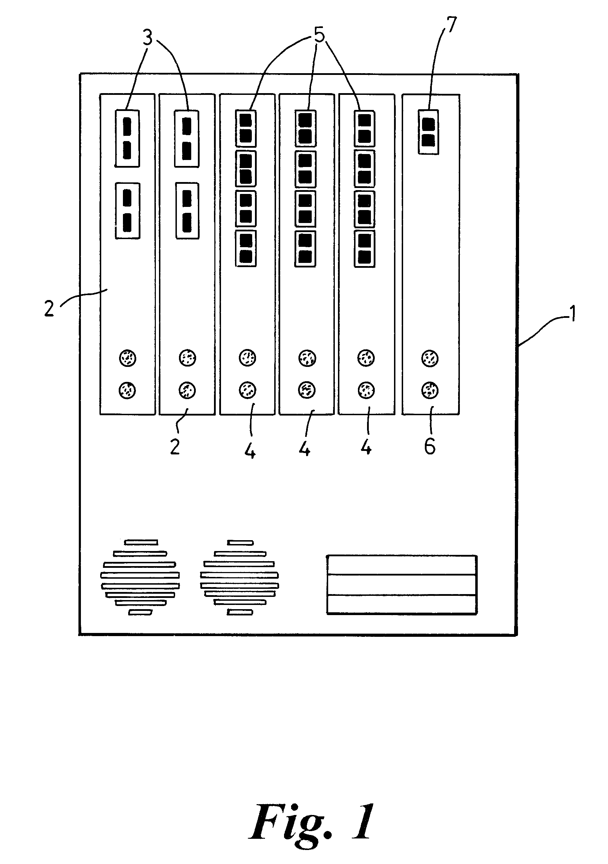

Thus, as shown in FIG. 1, a modern piece of network equipment 1 which is to be coupled to an optical network (not shown) commonly has a number of different sockets on, for example, a rear side of the equipment, or quite possibly the front. The sockets are mounted on line cards, which are internally connected to a mother board, the main processing elements of the network equipment potentially being distributed on either the line cards, the motherboard, dedicated processing cards or some combination of all three. As shown, there may be different numbers of identical line cards having sockets according to a particular standard. For example, as shown in Figure 1, the network equipment shown has two line cards 2, each having two GBIC sockets 3, three line cards 4, each having four SFP sockets 5, and one line card 6 having an XFP socket 7. In normal use, most of these sockets would have connected to them various optical transceivers, which would also be connected on to optical fibres (not shown), connected to various optical networks. The optical transceivers would be used, as described above, to convert the optical signals transmitted thorough the network to electrical signals to be processed in the network equipment, and vice versa.

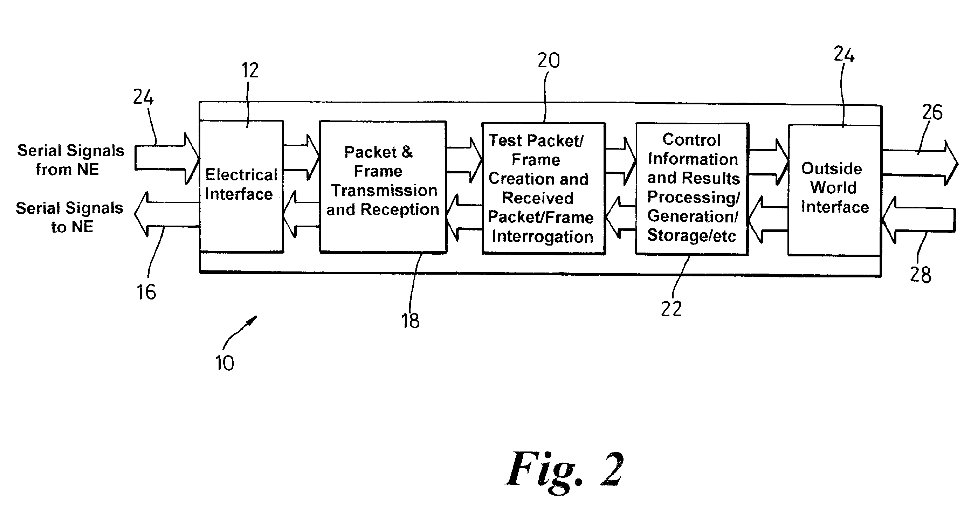

Turning now to Figure 2, there is shown a schematic diagram of a test device 10, which can be used to test the network equipment 1. The test device 10 includes an electrical interface 12, which is connected at an external periphery of the device 10 to a plug (not shown) of a size and shape suitable to connect to one of the sockets 3, 5 or 7 of the network equipment 1 so as to allow serial electrical signals from and to the network equipment to be passed to and from the electrical interface 12, as indicated by arrows 14 and 16. The electrical interface 12 is coupled to a packet and frame transmission and reception module 18. The packet and frame transmission and reception module 18 is coupled to a test packet/frame creation and received packet/frame interrogation module 20. This is coupled, in turn to a control module 22 for controlling information and test results. The control module 22 is coupled to an outside world interface 24, which can communicate with the outside world, for example with a remote controller (not shown), as indicated by arrows 26 and 28.

The electrical interface 12 transmits electrical signals having the correct analogue parameters for transmission into the network equipment 1 that the test device is to be inserted into. It takes the signals in an internal format created by the packet and frame transmission and reception module 18 for injection into the network equipment and converts them into the appropriate voltage, slew rate, characteristic impedance etc. It is also responsible for supplying the correct termination impedance etc for the signals transmitted by the network equipment, and receiving these signals and converting them into the internal format required by the packet and frame transmission and reception module 18.

In the case of this test device being used, for example, in a Gigabit Ethernet interface socket, of either the GBIC or SFP variety, the packet and frame transmission and reception module 18 would be responsible for the implementation of enough of the PCS layer of the IEEE 802.3z standard to make the network equipment 1 think it was connected to a normal optical Gigabit Ethernet transceiver link. On the input path of the tester device it would be responsible for serial to parallel conversion, clock recovery, comma alignment, and 10-bit to 8-bit decoding. It would also remove any idles, etc and recover the MAC layer frames for passing to the test packet/frame creation and received packet/frame interrogation module 20. On the output path of the tester device, it would be responsible for taking test packets created by the test packet/frame creation and received packet/frame interrogation module 20, encoding them from 8 bits to 10 bits, and serializing the packets to pass to the electrical interface 12. It would also be responsible for injecting appropriate idle signals when no packets/frames are being transmitted. The receive and transmit sides would work in conjunction to perform whatever auto-negotiation functionality as per the IEEE 802.3z standard which would be required by the network equipment to function correctly.

In the case of this device being used, for example, in a Gigabit Ethernet interface socket, of either the GBIC or SFP variety, the test packet/frame creation and received packet/frame interrogation module 20 would be responsible for implementing enough of the MAC layer of the IEEE 802.3z standard to create frames for ultimate transmission to, and interrogate frames ultimately received from, the network equipment 1 that the tester device 10 is inserted into. For example, the destination and source addresses and type fields would need to be populated, and the Frame Check Sequence at the end of the frame would be required to be calculated, and inserted in the appropriate place within the packet. On the receive side, the MAC addresses would need to be verified, and the FCS checked for correctness. Depending on what type of testing is required, filling in different source and destination MAC addresses may be enough. Additionally, higher layer protocol packets may be created on the transmit side and tested on the receive side, i.e. TCP and IP protocol fields may be used, and varied, to stimulate and test the network equipment appropriately, to check it's response to varying packet IP addresses, varying TCP port numbers, and varying packet sizes etc. The packets created may be transmitted at differing average, peak, and minimum packet rates, depending on the required testing.

By using the electrical serial standard that is used for the interface on the network equipment 1 that is being tested, which is normally used to pass signals to and from the network equipment 1 and the optical pluggable transceiver, the test device 10 may be plugged in without concerns about the type of fibre, or wavelength, or type of fibre connector; to many different pieces of network equipment that conform to the GBIC or SFP or XFP or whatever standard that the plug in test device 10 is designed to accommodate.

The physical size, power consumption, and interface connection mechanical and electrical details for the various types of pluggable optical transceiver devices are readily available from the appropriate industry bodies that devise and manage the standards. The tester device needs to comply with the standards in such a way as to make the plug in tester device appear to be a normal optical transceiver device to the network equipment it is inserted into.

Since there is no network connection interface, the body, and internal printed circuit board, etc may potentially extend further out from the "socket" than a usual optical transceiver, albeit while ensuring it does not expand in dimensions in directions that make it foul adjacent cables, and hardware etc. The tester device should therefore have the same electrical input and output properties as the normal transceivers.

By being small and relatively cheap, the plug in tester devices could be bought in sufficient numbers to test many interfaces on a piece of network equipment, or allow engineers in a laboratory to have several each, which would allow them to perform quick tests without the need to use large expensive equipment all the time, freeing it up for people who need it's greater capabilities.

The control module 22 is used to control information used by the test packet/frame creation and received packet/frame interrogation module 20 to generate the test packets/frames. If, for example, various protocol parameters are stored in a memory (not shown) in the tester device 10, the control module 22 would be used to access and control the memory to obtain information from the memory as needed by the test packet/frame creation and received packet/frame interrogation module 20. Furthermore, the control module would be used to control the processing and storage of received packets and frames to create test results. Such results could be stored in the memory, for example, for later downloading and processing at a different location by different equipment. For example, preliminary test results may be so stored "on-site" from the network equipment being tested, and the test device may then be taken to a laboratory, where the preliminary test results may then be downloaded for further processing.

There are potentially many ways to control one or several of these devices to test network equipment. The control information could be sent to the device "in-band", i.e. through the network equipment's normal data handling channels from a controller device. Likewise, either raw packets/frames, or results generated from those packets/frames that the network equipment sends to the tester device based on the operation of the network equipment in response to the testing being applied could be sent through the normal network data path back to the controller.

Alternatively, as mentioned above, the devices could operate stand alone, and after the test, be removed from the network element and be connected (potentially at a later time back in a laboratory or office away from the site of the test, or alternatively to a convenient hand held device or any computer available at the test location) to a controller for downloading the results of the test, and perhaps configuring a new test.

Furthermore, the tester device could be provided with a JTAG or USB interface, for instance, or a wireless interface such as Wireless Lan or Zigbee, or Bluetooth, for example, to allow a suitably configured PC or Laptop or Pocket PC device to communicate with the plugged in tester device, (or devices) and dynamically control the transmitting and or receiving functionality of the devices to perform a range of tests, and to gather results for analysis that requires more capability than could be provided within the devices themselves. By being intimately coupled to the data paths of the equipment under test, an in-band synchronisation scheme could be used to give all the plug in tester devices in the system a common sense of time, so one way delay and delay variation tests could be performed without requiring GPS, and with potentially better accuracy than can be achieved with NTP etc.

By having no optical or electrical connectors on the network side of the normal pluggable optical transceiver, additional power supplies may be provided to the tester devices if the power available through the host side connector is insufficient.

Such test devices, as well as being used in a test or Research and Development laboratory, could be used as a final manufacturing test. Equipment manufacturers usually have equipment built and tested in various stages of assembly. When an order is placed, and moved through the manufacturing system for fulfillment, a quick final check before packing could be performed using such tester devices to ensure that the network equipment is operating correctly. In fact, if the cost of these tester devices were low enough, they could be left plugged in, and could be used by the customer to perform a first turn on self-test after delivery, to ensure that no faults occurred due to bad/rough handling during shipping.

It will be appreciated that although only one particular embodiment of the invention has been described in detail, various modifications and improvements can be made by a person skilled in the art without departing from the scope of the present invention.

## Claims

1. A test device for testing optical network equipment, the test device comprising:
a plug for plugging into a standard electrical socket (3, 5, 7) on the optical network equipment (1) to be tested, the plug having the same physical and electrical operating parameters as that of an optical transceiver that would be plugged into the standard electrical socket in normal use;
an electrical interface (12) coupled to the plug for transmitting and receiving electrical signals to and from the optical network equipment to be tested via the plug;
a test controller module (18, 20, 22) coupled to the electrical interface for generating test control signals in an appropriate protocol format for transmission to the optical network equipment to be tested for controlling and/or stimulating predetermined functions of the optical network equipment to invoke responses from the optical network equipment, and for receiving resultant signals from the optical network equipment.

2. A test device according to claim 1, wherein the test controller module (18, 20, 22) further comprises a processor for processing the received resultant signals to generate test results.

3. A test device according to claim 1 or claim 2, further comprising a memory for storing the received resultant signals.

4. A test device according to claim 2 or claim 3, further comprising a memory for storing the test results.

5. A test device according to any preceding claim, further comprising a communication interface (24) coupled to the test controller module including a connector for coupling to a communication path to a remote controller.

6. A test device according to claim 5, wherein the connector provides for a wired connection to the communication path.

7. A test device according to claim 5, wherein the connector provides for a wireless connection to the communication path.

8. A test device according to any preceding claim, wherein the test control signals are generated in a protocol format that is compatible with a protocol or format that is used by the optical transceiver that would be plugged into the standard electrical socket in normal use.

9. A method of testing optical network equipment, the method comprising the steps of:
plugging a tester (10) into a standard electrical socket (3, 5, 7) on the optical network equipment (1) to be tested;
operating the tester to communicate with the optical network equipment to be tested via the standard electrical socket, wherein the tester uses the same electrical signaling protocols that are used by an optical transceiver that would be plugged into the standard electrical socket to communicate with the optical network equipment in normal use so that the optical network equipment communicates with the tester in the same way as it would communicate with the optical transceiver;
testing the optical network equipment using the tester to control and/or stimulate predetermined functions of the optical network equipment to be tested;
receiving resultant signals from the optical network equipment; and
processing the received resultant signals to produce test results.

10. A method of testing optical network equipment according to claim 9, wherein the step of receiving resultant signals from the optical network equipment occurs at the tester.

11. A method of testing optical network equipment according to claim 9 or claim 10, wherein the step of processing the resultant signals occurs at the tester.

12. A method of testing optical network equipment according to claim 9, wherein the step of receiving resultant signals from the optical network equipment occurs at a location remote from the tester.

13. A method of testing optical network equipment according to claim 9 or claim 12, wherein the step of processing the resultant signals occurs at a location remote from the tester.

14. A method of testing optical network equipment according to any one of claims 9 to 13, wherein the tester comprises:
a plug for plugging into a standard electrical socket (3, 5, 7) on the optical network equipment (1) to be tested, the plug having the same physical and electrical operating parameters as that of an optical transceiver that would be plugged into the standard electrical socket in normal use;
an electrical interface (12) coupled to the plug for transmitting and receiving electrical signals to and from the optical network equipment to be tested via the plug;
a test controller module (18, 20, 22) coupled to the electrical interface for generating test control signals in an appropriate protocol format for transmission to the optical network equipment to be tested for controlling and/or stimulating predetermined functions of the optical network equipment to invoke responses from the optical network equipment, and for receiving resultant signals from the optical network equipment.

15. A method of testing optical network equipment according to claim 14, wherein the tester further comprises a communication interface (24) coupled to the test controller module including a connector for coupling to a communication path to a remote controller.

16. A method of testing optical network equipment according to claim 15, wherein the connector provides for a wired connection to the communication path.

17. A method of testing optical network equipment according to claim 15, wherein the connector provides for a wireless connection to the communication path.

18. A method of testing optical network equipment according to any one of claims 14 to 17, wherein the test control signals are generated in a protocol format that is compatible with a protocol or format that is used by the optical transceiver that would be plugged into the standard electrical socket in normal use.
